# EUROPÄISCHE PATENTSCHRIFT

(11) **EP 1 245 886 B1**
(45) Veröffentlichungstag und Bekanntmachung des Hinweises auf die Patenterteilung: **16.11.2005**
(21) Anmeldenummer: 02003399.9
(22) Anmeldetag: 14.02.2002
(51) Int. Cl.: F16L 11/16, F16L 11/24

(54) **Mehrlagiger Schlauch aus profiliertem Bandmaterial**
Multilayer hose made from profiled strips
Tuyau flexible multicouche fait de bandes profilées

(30) Priorität: 19.03.2001 DE 1013180
(43) Veröffentlichungstag der Anmeldung: 02.10.2002
(73) Patentinhaber: WESTFALIA Metallschlauchtechnik GmbH & Co. KG, 57271 Hilchenbach (DE)
(72) Erfinder: Günter, Hupertz, 57482 Wenden (DE); Baumhof, Dietmar, 57080 Siegen (DE)
(74) Vertreter: Valentin, Ekkehard

(56) Entgegenhaltungen:
- DE-A- 3 441 064
- DE-C- 3 804 105

## Beschreibung

Die Erfindung betrifft einen Schlauch, hergestellt durch schraubenförmiges, mehrlagiges Wickeln von profiliertem Bandmaterial mit agraffartiger, eingehakter Bindung, bei dem eine im wesentlichen parallel zur Schlauchlängsachse umgebogene Profilschlaufe der einen bzw. ersten, im Querschnitt S-förmigen Wickellage als schlaufenförmige Bandverdopplung und einstückig mit einer Überdeckung in Form eines horizontalen, verlängerten Profilendabschnittes ausgebildet ist, wobei die Profilschlaufe der ersten Wickellage eine in entgegengesetzter Richtung umgebogene Profilschlaufe der benachbarten bzw. zweiten, im Querschnitt S-förmigen Wickellage schlauchinnenseitig untergreift, wobei die Profilschlaufe der zweiten Wickellage von der Bandverdopplung in Achsrichtung des Schlauches verschiebbar aufgenommen ist.

Ein solcher Schlauch, der vorrangig an Abgasanlagen mit den dort hohen Anforderungen an die Gasdichtheit verwendet wird und mit jedem beliebigen Querschnitt, z.B. rund oder eckig, in üblicher Weise hergestellt werden kann, ist durch die DE 34 41 064 C2 bekanntgeworden. Bei diesen im Längsschnitt des Schlauches gesehen S-förmigen Wickellagen wird jeweils eine schlaufenförmige Bandverdopplung einer ersten Wickellage mit einer nur einlagigen, umgebogenen Profilschlaufe der jeweils anderen Wickellage zu einer in Achsrichtung verschiebbaren Schlaucheinheit verhakt, d.h. der Schlauch läßt sich sowohl strecken als auch stauchen, wobei die Wickellagen sich entsprechend gegeneinander verschieben. Dieses Bewegungsspiel wird durch einen geringen Abstand ermöglicht, der den horizontalen Verschiebeweg oder auch die Biegsamkeit des Schlauches bestimmt bzw. begrenzt und zwischen den jeweilig vertikal verlaufenden Abschnitten der S-Form und dem vertikalen Endabschnitt der einlagig abgebogenen Profilschlaufe zur Verfügung steht. Bei diesem agraffähnlichen Profil besitzt der Schlauch durch die Bandverdopplung und die Überdeckung aufgrund der verlängerten ProfilEndabschnitte eine schlauchinnenseitige Gestaltung mit Schuppen, während er außenseitig aber in den Bereichen mit dem für das Bewegungsspiel benötigten Abständen offen ist.

Der Erfindung liegt die Aufgabe zugrunde, einen gattungsgemäßen Schlauch, insbesondere für Abgasleitungen von Brennkraftmaschinen, mit verbesserten Eigenschaften, insbesondere höherer Dichtheit und Haltbarkeit, zu ermöglichen.

Diese Aufgabe wird erfindungsgemäß dadurch gelöst, daß die Profilschlaufe der zweiten Wickellage als eine schlaufenartige Bandverdopplung und einstückig mit einer einen horizontalen, verlängerten Profilendabschnitt aufweisenden Überdeckung ausgebildet ist, wobei die Profilschlaufe der zweiten Wickellage die schleifenförmige Bandverdopplung der ersten Wickellage schlauchaußenseitig übergreift. Indem somit aufgrund der auch außenseitigen Überdeckungen, d.h. verlängerten Profilendabschnitte eine Gestaltung des Schlauches mit Schuppen sowohl auf der Innen- als auch auf der Außenseite und damit ein Doppelschuppenschlauch erreicht wird, läßt sich die Dichtheit gegenüber dem seit vielen Jahren bewährten, bekannten Abgasschlauch noch weiter erhöhen. Dieser ist nicht nur in der gestreckten, sondern auch in der gestauchten Lage sowie in jeder Arbeitsposition absolut überdeckt und dicht. Damit wird gleichzeitig die Haltbarkeit deutlich verbessert, weil Verschmutzungen bzw. Schmutzpartikel von außen nicht in Windungen des Schlauches gelangen können, so daß sich insbesondere auch abrassive Medien nicht mehr schädigend auswirken. Weiterhin ergibt sich eine Reduzierung der Abgasgeräusche.

Nach einer bevorzugten Ausführung der Erfindung weist jede der ersten und zweiten Wickellagen zwei schlaufenförmige Bandverdopplungen auf, die mit ihren offenen Schlaufen einander zugewandt in unterschiedlicher Höhe ausgebildet sind. Über die gesamte Länge des Schlauches ist somit die Bandverdopplung der einen Lage mit jeweils der komplementären Bandverdopplung der anderen Lage verhakt, wobei die Höhendifferenz zwischen den in unterschiedlichen Ebenen angeordneten Bandverdopplungen einer Lage zumindest der Dicke einer solchen Bandverdopplung entspricht. Über die Schlauchlänge sind im Wechsel die Überdeckungen bzw. Schuppen derselben Wickellage einmal innen und einmal außen. Insgesamt liegt außen und innen eine weitestmöglich durchgehend glatte Schlauchoberfläche vor, was wegen der außen verlaufenden Schuppen auch die gasdichte Anschlußtechnik, z.B. über Schellen, erleichtert und verbessert.

Eine Ausgestaltung der Erfindung sieht vor, daß in den von einerseits den horizontalen Überdeckungen und andererseits den S-förmigen Profilabschnitten der jeweils komplementären Wickellage eingeschlossenen Freiräumen Dichtungen angeordnet sind, die sich wegen der glatten Außenfläche des Schlauches alternativ oder ergänzend vorteilhaft auch schlauchaußenseitig im Bereich der Überdekkungen vorsehen lassen. Diese durch die erfindungsgemäße Doppelschuppenschlauch-Gestaltungen in einfacher Weise möglichen zusätzlichen Dichtungen tragen unterstützend zu dem außerordentlich hohen Grad der Dichtheit des Schlauches bei.

Weitere Einzelheiten und Vorteile der Erfindung ergeben sich aus den Ansprüchen und der nachfolgenden Beschreibung eines in den Zeichnungen dargestellten Ausführungsbeispiels der Erfindung. Es zeigen:
- Fig. 1: die Gesamtansicht eines aus profiliertem Bandmaterial mehrlagig hergestellten Schlauches;
- Fig. 2: in stark vergrößertem Maßstab die in Fig. 1 strichpunktiert eingekreiste Einzelheit mit schematischer Darstellung der Anbindung der einzelnen Wickellagen;
- Fig. 3: im vergrößerten Maßstab einen Teil-Längsschnitt durch den Schlauch nach Fig. 1 im Zustand der gestreckten, auseinandergezogenen Wickellagen;
- Fig. 4: den Schlauch-Teil-Längsschnitt nach Fig. 3 mit demgegenüber gestauchten Wickellagen; und
- Fig. 5: einen Teil-Längsschnitt wie nach Fig. 4 mit verschiedensten Dichtungsanordnungen.

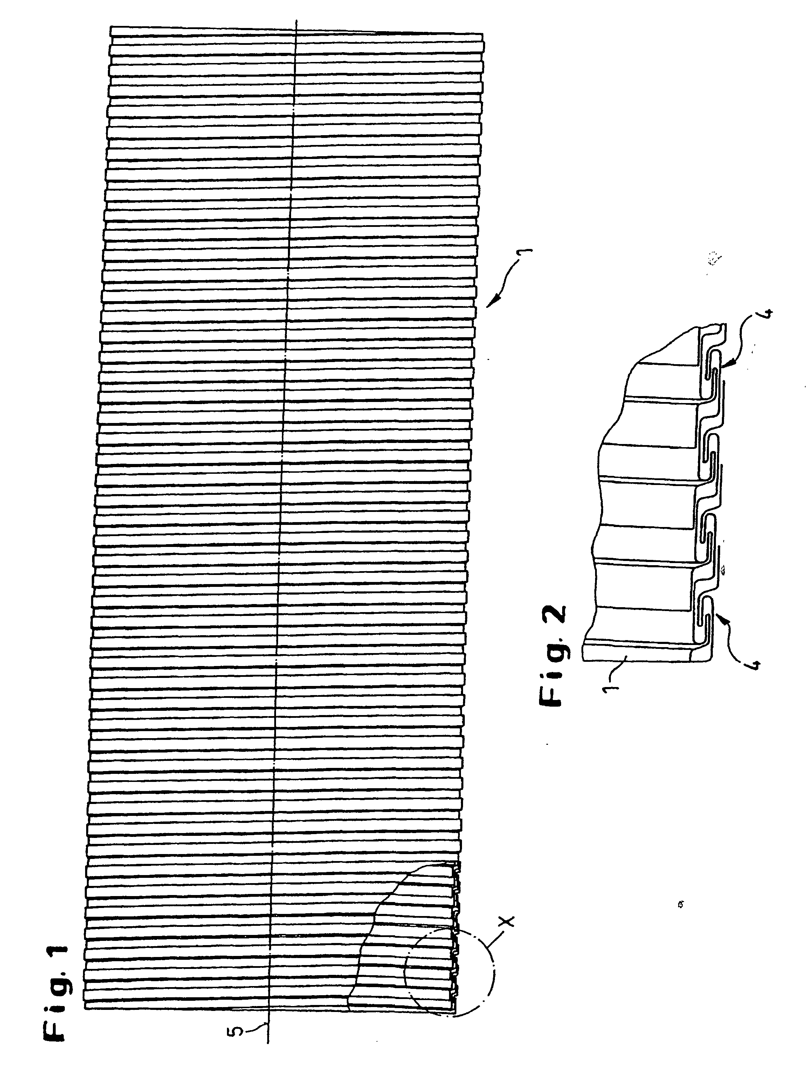

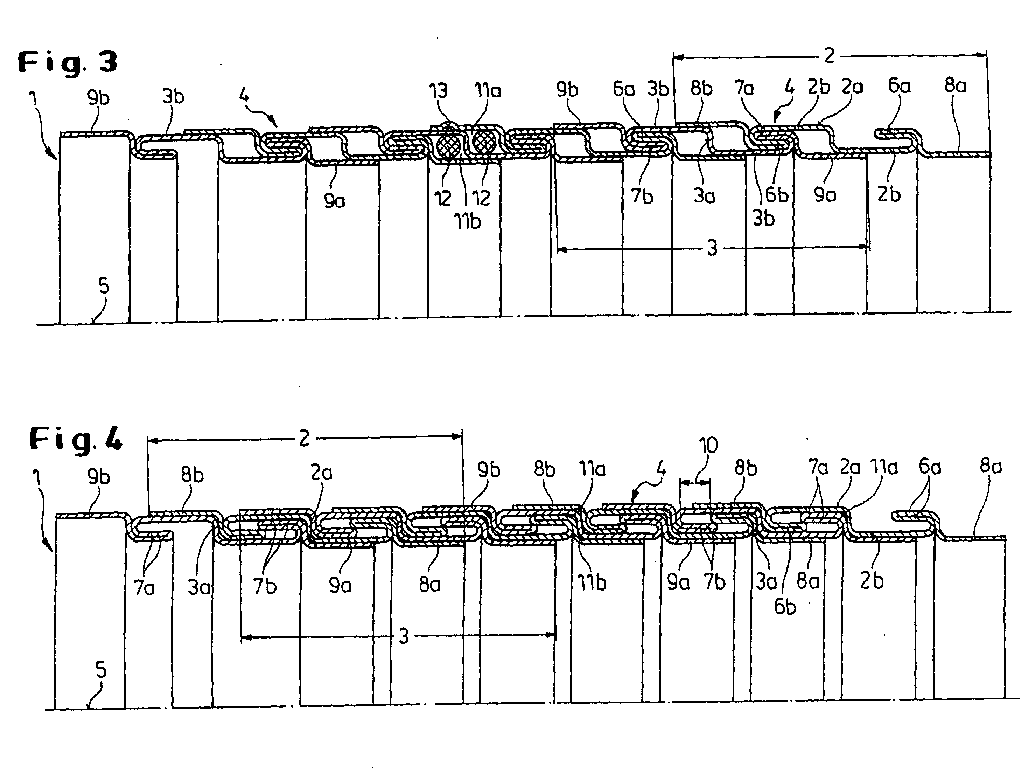

Ein in Fig. 1 gezeigter Schlauch 1 besteht aus zahlreichen Windungen, die durch schraubenförmiges Wickeln von beispielsweise metallischem profiliertem Bandmaterial mehrlagig hergestellt sind. Die einzelnen Wickellagen 2 und 3 (vgl. die Fig. 3 und 4) wiederholen sich wechselweise und sind über die Länge des Schlauches 1 durch Profilschlaufen-Einhakungen 4 formschlüssig aneinandergereiht miteinander verbunden.

Wie näher den Fig. 3 und 4 zu entnehmen ist, besitzt jede Wickellage 2 bzw. 3 in Längsrichtung des Schlauches 1 gesehen ein im Querschnitt im wesentlichen S-förmiges Profil 2a bzw. 3a, wobei im Anschluß an die im Ausführungsbeispiel zur Schlauchmitten- und -längsachse 5 parallelen Horizontalabschnitte 2b bzw. 3b gegensinnig abgebogene, schlaufenförmige Bandverdoppelungen 6a, 6b bzw. 7a, 7b ausgebildet sind. Diese gehen in das jeweilige Profil bzw. die Wickellagen 2 und 3 beendenden Überdeckungen 8a, 8b bzw. 9a, 9b, d.h. in das jeweilige S-Profil 2a bzw. 3a verlängernden Profilendabschnitten über. Diese unter- bzw. übergreifen wechselweise von Wickellage zu Wickellage 2 bzw. 3 in dem in Fig. 4 gezeigten gestauchten Betriebszustand des Schlauches 1 abwechselnd die obere bzw. untere Bandverdopplung 6a oder 6b bzw. 7a oder 7b der jeweils komplementären Wickellage.

Die Wickellagen 2 bzw. 3 sind mit ihren gegensinnig ausgebildeten schlaufenförmigen Bandverdopplungen 6a, 6b bzw. 7a, 7b ineinandergehakt, wobei die Tiefe 10 bzw. Breite der Bandverdopplung (vgl. Fig. 4) das Ausmaß der horizontalen Verschiebung der Wickellagen 2 und 3 relativ zueinander festlegt, ohne den Hakenverbund aufzuheben; die auseinandergezogene Ausgangs- bzw. Strecklage des Schlauches 1, bei der die Bandverdopplungen 7a und 6b bzw. 6a und 7b völlig ineinander getaucht sind, ist in Fig. 3 gezeigt.

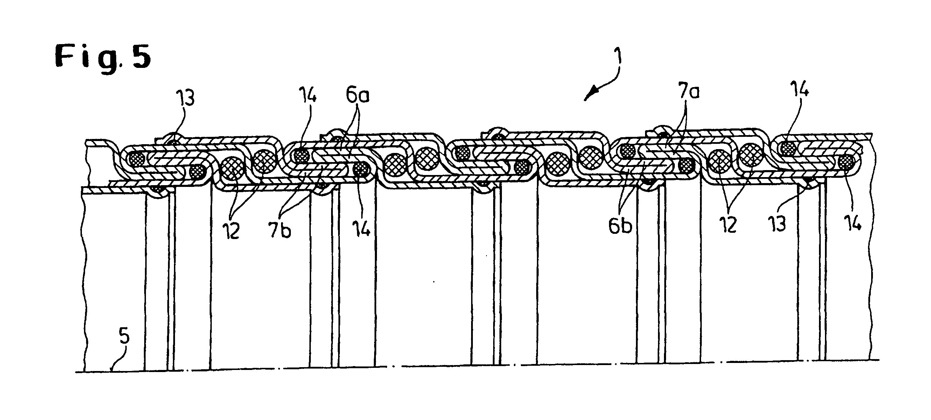

In jedem Fall sorgen jedoch die Schuppen-Überdeckungen 8a, 8b bzw. 9a, 9b dafür daß das Schlauchinnere sowohl an der Schlauchmantel-Innenseite als auch an der Schlauchmantel-Außenseite eingekammert ist und Schmutz nicht von außen eindringen und in die Windungen gelangen kann. Die innen- und außenseitigen Überdeckungen 8a, 8b bzw. 9a, 9b schaffen zudem weitestmöglich durchgehend glatte Flächen, was einerseits die Durchströmungsbedingungen verbessert und andererseits die gasdichte Anschlußtechnik mittels von außen angesetzten Schellen (in den Figuren nicht gezeigt) begünstigt. Zudem bietet sich die Möglichkeit, in z. B. den von den horizontalen Überdeckungen 8a, 8b bzw. 9a, 9b und den S-förmigen Profilabschnitten 2a, 2b eingeschlossenen Freiräumen 11 a, 11 b zusätzlich noch Dichtungen 12 vorzusehen, wie - allerdings stark überzeichnet - in Fig. 3 verdeutlicht. Schließlich erlaubt es die glatte Außenfläche des Schlauches 1, daß weiterhin auch im Bereich der Überdeckungen 8a, 8b bzw. 9a, 9b Umfangs-Dichtungen 13, wie ebenfalls in Fig. 3 schematisch angedeutet, vorgesehen werden können. Die Vielfalt der möglichen Dichtungsanordnungen wird durch Fig. 5 veranschaulicht, in der Dichtschnüre 14 weiterhin auch in dem Freiraum zwischen den ineinandergehakten Bandverdoppelungen 6b, 7a bzw. 6a, 7b vorgesehen sind. Diese Dichtvarianten können in ihrer Gesamtheit oder einzeln bzw. in Kombination, d.h. wie gemäß Fig. 3 mit Dichtschnüren 12 und 13 oder nur Dichtschnüren 12 bzw. 13 bzw. 14 zur Anwendung kommen.

## Patentansprüche

1. Schlauch (1) hergestellt durch schraubenförmiges, mehrlagiges Wickeln von profiliertem Bandmaterial mit agraffartiger, eingehakter Bindung, bei dem eine im wesentlichen parallel zur Schlauchlängsachse (5) umgebogene Profilschlaufe der einen bzw. ersten, im Querschnitt S-förmigen Wickellage (2) als schlaufenförmige Bandverdopplung (6b) und einstückig mit einer Überdeckung (8a) in Form eines horizontalen, verlängerten Profilendabschnitts ausgebildet ist, wobei die Profilschlaufe der ersten Wickellage (2) eine in entgegengsetzter Richtung umgebogene Profilschlaufe der benachbarten bzw. zweiten, im Querschnitt S-förmigen Wickellage (3) schlauchinnenseitig untergreift, wobei die Profilschlaufe der zweiten Wickellage (3) von der Bandverdopplung (6b) in Achsrichtung des Schlauches (1) verschiebbar aufgenommen ist,
**dadurch gekennzeichnet,**
**daß** die Profilschlaufe der zweiten Wickellage (3) als schlaufenförmige Bandverdopplung (7a) und einstückig mit einer einen horizontalen, verlängerten Profilendabschnitt aufweisenden Überdeckung (9b) ausgebildet ist, wobei die Profilschlaufe der zweiten Wickellage (3) die schlaufenförmige Bandverdopplung (6b) der ersten Wickellage (2) schlauchaußenseitig übergreift.

2. Schlauch (1) nach Anspruch 1,
**dadurch gekennzeichnet,**
**daß** jede der ersten und zweiten Wickellagen (2, 3 bzw. 2+n, 3+n) zwei schlaufenförmige Bandverdopplungen (6a, 6b bzw. 7a, 7b) aufweist, die mit ihren offenen Schlaufen einander zugewandt in unterschiedlicher Höhe ausgebildet sind.

3. Schlauch nach Anspruch 1 oder 2,
**dadurch gekennzeichnet,**
**daß** in den von einerseits den horizontalen Überdeckungen (8a, 9b) und andererseits den S-förmigen Profilabschnitten (2a, 3a) der jeweils komplementären Wickellage (2; 3) eingeschlossenen Freiräumen (11a, 11b) Dichtungen (12) angeordnet sind.

4. Schlauch nach einem der Ansprüche 1 bis 3,
**gekennzeichnet durch**
schlauchaußenseitig und/oder -innenseitig im Bereich der Überdeckungen (8a, 9b) angeordnete Dichtungen (13, 14).

## Claims

1. A tube (1) manufactured by helical multilayer winding of profiled sheeting material with clasp-like hooked binding in which a profile loop bent over to run essentially parallel to the longitudinal axis (5) of the tube of the one and/or the first winding layer (2), which is essentially S-shaped in cross section and is in the form of a loop-shaped doubling of the sheeting (6b) and is designed in one piece with a cover (8a) in the form of a horizontal, lengthened profile end section, whereby the profile loop of the first winding layer (2) engages on the inside of the tube beneath a profile loop of the adjacent and/or second S-shaped winding layer (3), which has an S-shaped cross section and is bent over in the opposite direction, whereby the profile loop of the second winding layer (3) can be displaceably accommodated by the doubling of the sheeting (6b) in the axial direction of the tube (1),
**characterized in that**
the profile loop of the second winding layer (3) is designed as a loop-shaped doubling of the sheeting (7a) and is designed in one piece with a cover (9b) having a horizontal, lengthened profile end section, whereby the profile loop of the second winding layer (3) extends beyond the loop-shaped doubling of the sheeting (6b) of the first winding layer (2) on the outside of the tube.

2. The tube (1) according to claim 1,
**characterized in that**
each of the first and second winding layers (2, 3 and/or 2+n, 3+n) has two loop-shaped doublings of the sheeting (6a, 6b and/or 7a, 7b), which are designed at different heights with their open loops facing one another.

3. The tube according to claim 1 or 2,
**characterized in that**
gaskets (12) are arranged in the free spaces (11a, 11b) enclosed by on the one hand the horizontal covers (8a, 9b) and on the other hand by the S-shaped profile sections (2a, 3a) of the respective complementary winding layer (2; 3).

4. The tube according to any one of claims 1 through 3,
**characterized in that**
the gaskets (13, 14) are arranged on the outside of the tube and/or on the inside of the tube in the area of the covers (8a, 9b).

## Revendications

1. Tuyau (1) fabriqué par enroulement hélicoïdal en plusieurs couches de matériau profilé en bande, équipé d'une fixation crochetée de type agrafe, dans lequel une boucle de profilé recourbée sensiblement parallèlement à l'axe longitudinal du tuyau (5) d'une ou de la première couche d'enroulement (2) à section transversale en forme de S est réalisée sous forme d'un doublage de bande en forme de boucle (6b) et de manière à former une pièce avec un recouvrement (8a) ayant la forme d'une section extrême de profilé horizontale prolongée, la boucle de profilé de la première couche d'enroulement (2) entourant par-dessous, du côté intérieur du tuyau, une boucle de profilé recourbée dans le sens opposé de la couche d'enroulement voisine ou de la deuxième couche d'enroulement à section transversale en forme de S, la boucle de profilé de la deuxième couche d'enroulement (3) reposant de manière déplaçable sur le doublage de bande (6b) dans le sens de l'axe du tuyau (1),
**caractérisé en ce que**
la boucle de profilé de la deuxième couche d'enroulement (3) est réalisée sous forme d'un doublage de bande en forme de boucle (7a) et en une pièce avec un recouvrement (9b) présentant une section extrême de profilé horizontale prolongée, la boucle de profilé de la deuxième couche d'enroulement (3) entourant par-dessus le doublage de bande (6b) en forme de boucle de la première couche d'enroulement (2).

2. Tuyau (1) selon la revendication 1,
**caractérisé en ce que**
chacune des première et deuxième couches d'enroulement (2, 3 ou 2 + n, 3 + n) présente deux doublages de bande en forme de boucles (6a, 6b ou 7a, 7b) qui sont réalisés à des hauteurs différentes de manière à ce que leurs boucles ouvertes soient tournées les unes vers les autres.

3. Tuyau selon la revendication 1 ou 2,
**caractérisé en ce que**,
dans les espaces libres (11 a, 11 b) circonscrits d'une part par les recouvrements horizontaux (8a, 9b) et d'autre part par les sections de profilé en forme de S (2a, 3a) de la couche d'enroulement respectivement complémentaire (2 ; 3), sont disposés des joints (12).

4. Tuyau selon une des revendications 1 à 3,
**caractérisé par**
des joints (13, 14) disposés du côté extérieur et/ou du côté intérieur du tuyau au niveau des recouvrements (8a, 9b).
